# EUROPEAN PATENT APPLICATION

(11) **EP 2 189 652 A1**
(43) Date of publication of application: **26.05.2010**
(21) Application number: 08794056.5
(22) Date of filing: 07.07.2008
(51) Int. Cl.: F03D 1/04

(54) **WIND POWER PLANT**

(30) Priority: 20.08.2007 RU 2007131488
(71) Applicant: Arter Technology Limited, Guernsey GY1 4EW (GB)
(72) Inventor: OVCHINNIKOV, Alexsandr Ivanovich, Bologoe Tverskaya obl. 171070 (RU)
(86) International application number: PCT/RU2008/000439
(87) International publication number: WO 2009/031926

(57) **Abstract**

Wind-driven electric plant.

Concept of the invention: a wind-driven electric plant comprises an annular inlet shell and an annular outer shell with the cross-section of its inside surface being shaped as a circle. The annular shell accommodates a turbine in a coaxial relation thereof. Kinematically coupled with the turbine is a mechanism for converting mechanical energy. At least a portion of an outside surface of the inlet shell is shaped in cross section as a regular polygon. A radius of the regular polygon defining the cross section of the outside surface of the inlet shell at an inlet of the latter is not less than 0.55 and not more than 0.95 of a circumradius defining the cross section of the inside surface of the outer shell in a minimum section thereof. 4 claims, dependent; 4 ill.

## Description

The invention relates to power generation, particularly wind-driven electric plants for converting wind power into electric or other energy and can be used in the industry, agriculture and so on, and so forth.

Known is a wind-driven electric plant comprising an annular inlet shell, a turbine provided in a coaxial relation inside the inlet shell and a mechanism kinematically coupled with the turbine for converting mechanical energy (cf. patent US No 4218 175, cl. F03D 1/04, published 19.08.1980).

The disadvantages of a known apparatus are as follows: a non-uniform action of an air flow on turbine blades, a factor that is responsible for variable g-loads giving rise to instability of the parameters of an electric current produced by a mechanism for converting mechanical energy and also a relatively low efficiency of the apparatus because of an incomplete utilization of air flow energy.

The closest as to technical essence and an attainable technical result is a wind-driven electric plant including an annular inlet shell, a turbine arranged in a coaxial relation within the inlet shell, a mechanism kinematically coupled with the turbine for converting mechanical energy, and an annular outer shell (cf. patent RF No 2261362, cl. F03D 1/04. published 10.02.2005).

The construction of a known apparatus partially removes the defects of the above-described wind-driven electric plant owing to providing an annular outer shell performing the functions of an ejector, which increases the speed of an air flow on a turbine, and thus raising the efficiency of the wind-driven electric plant. The known apparatus selected as the most pertinent prior art solution is disadvantageous in relatively low operational reliability thereof.

As is known, a wind-driven electric plant is most favourably operated in a certain range of air flow velocities. As the speed of an air flow (gusts of wind) exceeds a rated range, both the energy of the air flow incoming to an inlet shell and a discharge created by the outer shell also increase, which fact entails the increased speed of rotation of a turbine above the computed value. Said increased speed of rotation of the turbine will increase the speed of a mechanism kinematically coupled therewith as configured and designed for the conversion of mechanical energy. Thus, said elements of the construction of an apparatus will operate at increased loads, which will be responsible for a reduced reliability of the apparatus as a whole. And it will be recalled that variable g-loads appearing at the time of increasing the speed of the air flow above the rated range will result in instability of energy parameters (an electric current, for example) produced by the mechanical energy conversion mechanism.

The invention is directed to solving a task of creating a wind-driven electric plant for providing its reliable operation and stability of the parameters of the energy produced thru protection of an apparatus from an abrupt increase in the speed of an air flow by automatically adjusting a level of energy supplied to a turbine. The technical result attainable in execution of the invention consists in stabilizing a speed of rotation of the turbine by reducing the degree of discharge past the turbine when the speed of the air flow is increased above the computed value.

The task set is solved owing to the fact that a wind-driven electric plant comprising an annular inlet shell, a turbine coaxially arranged within the inlet shell, a mechanism kinematically coupled with the turbine, designed for converting mechanical energy and an annular outer shell with the cross section of its inside circular surface, at least part of an outside surface of the inlet shell is shaped as a regular polygon in cross section and what is more a radius of said regular polygon defining the cross section of the outside surface of the inlet shell at an inlet of the latter is not less than 0.55 and not more than 0.95 of the radius of a circumference defining the cross section of the inside surface of the outer shell in a minimal cross section thereof.

Besides, the task set is solved owing to the fact that the vertices of a regular polygon defining the cross section of an outside surface of an inlet shell have a rounding-off which is defined by at least a second power curve.

Besides, the task set is solved owing to the fact that at least part of an outside surface of an outer shell is provided by a lateral surface of a cylinder of revolution.

Besides, the task set is solved owing to the fact that at least part of an inside surface of an inlet shell and/or outer shell is provided by the lateral surface of a cone of revolution.

Besides, the task set is solved owing to the fact that at least part of an inside surface of an inlet shell and/or outer shell is provided by the lateral surface of a cylinder of revolution.

The invention will now be described in detail with reference to the drawings illustrating a specific embodiment thereof, in which: Fig. 1 shows a wind-driven electric plant; Fig. 2 - an arrow A view in Fig. 1; Fig. 3 - an alternative embodiment of a wind-driven electric plant; Fig. 4 - an arrow Γ view in Fig. 3.

A wind-driven electric plant comprises an annular inlet shell I being streamlined in longitudinal section, for example, wing-shaped. At least one turbine 2 is disposed inside the inlet shell in a coaxial relation therewith, i.e. a longitudinal axis of symmetry of the turbine 2 is arranged on a longitudinal axis of symmetry 3 of the inlet shell I. A cowl 4 can be provided upstream of the turbine 2 which is securely fastened by brackets (not shown on the drawings) on the inlet shell I. Turbine 2 is kinematically coupled with a mechanism 5 for converting mechanical energy and can be installed on a support (not shown) constructed and designed, for example, as column, to be fixed on the ground or as a base to be fixed on a vehicle. Turbine 2 can be pivotally connected with the support for turning an apparatus in any direction of the wind. Mechanism 5 for converting mechanical energy can be designed, for example, as an electric generator, a hydraulic pump or compressor. The kinematic relationship of the turbine 2 with the mechanical energy conversion mechanism 5 can, for example, be constructed as a belt drive, a propeller shaft or gear transmission, said mechanism 5 can be arranged in a central body 6. Inlet shell I, for example, by means of brackets 7 is connected with an annular outer shell; said outer shell 8 can be streamlined, in the form of a wing, for example, in longitudinal section. The apparatus may have a wind vane surface (not shown) provided on the outer shell 8 or the centre body 6 to allow orientation of the plant downwind. Said outer shell 8 is coaxial of the inlet shell I, or - to be more exact - the longitudinal axis of symmetry 3 of the inlet shell I is a longitudinal axis of symmetry of the outer shell 8. At least part of an outside surface 9 of said inlet shell I is a regular polygon in cross section, for example, a regular triangle (not shown), a regular tetragon (Fig. 4), a regular pentagon (Fig. 2), a regular hexagon (not shown) and so on, and so forth. And a particular condition is observed: a radius B of the regular polygon defining the cross section of the outside surface 9 of the inlet shell 1 at an inlet of the latter is not less than 0.55 and not more than 0.95 of a radius P of a circle defining the cross section of an inside surface 10 of the outer shell 8 in a minimal cross section thereof, i.e. 0.95 P ≥ B 0.55 P. Said relation between the geometric parameters of the apparatus has been obtained experimentally during tests carried out on an aerodynamic stand. The inferior limit of said range of relations between the geometric parameters of the apparatus defines the value B of a radius of the regular polygon defining the cross section of the outside surface 9 of the inlet shell I at the latter's inlet, with the proviso that a maximum excess of an air flow velocity of its computed value is about 25%. With the value B of a radius of the regular polygon defining the cross section of the outside surface 9 of the inlet shell I at the latter's inlet, departing from the limits of a lower value of said range, the inlet shell 1 creates, in virtue of its geometric form, a local resistance to the air flow at an inlet of the outer shell 8, which exerts a negative influence on the operation of the plant, and with the computed speeds of the air flow, reduces the efficiency of the wind-driven electric plant.

A superior limit of said range of relations between geometric parameters of the apparatus determines the value B of a radius of the regular polygon defining the cross section of the outside surface 9 of the inlet shell I at an inlet of the latter, with the proviso that a maximum excess of the speed of the air flow of its computed value is about 200%. With the value B of a radius of the regular polygon defining the cross section of the outside surface 9 of the inlet shell I at an inlet of the latter, departing from the limits of an upper value of said range, the inlet shell I does not substantially create a local resistance to the air flow at an inlet of the outer shell I and, as so, the speed of rotation of the turbine is not reduced on account of a reduced degree of discharge downstream of the turbine. A concrete value B of a radius of the regular polygon defining the cross section of the outside surface 9 of the inlet shell I at an inlet of the latter from the claimed range of its values is selected to take account of statistical data on the speeds of the air flow in a particular region, the geometric characteristics of the plant and other parameters.

An alternative structural embodiment of an apparatus provides for the vertices of a regular polygon defining the cross section of the outside surface 9 of the inlet shell 1, said vertices having a rounding-off 11 (Fig. 4) that is defined by at least a second order curve, for example, a circle, a parabola, a cycloid, to mention only few.

Another alternative structural embodiment of a wind-driven electric plant provides for at least part of an outside surface 12 (Fig. 3) of the outer shell 8 defined by the lateral surface of a cylinder of revolution.

With still another alternative structural embodiment of an apparatus, at least part of an inside surface 13 of the inlet shell I and/or at part of an inside surface 10 of the outer shell 8 can be defined by the lateral surface of a cone of revolution (Fig. 3).

At least part of the inside surface 13 of the inlet shell 1 and/or at least part of the inside surface 10 (not shown) of the outer shell 8 can be defined by the lateral surface of a cylinder of revolution.

A wind-driven electric plant is operated in the following manner.

An air flow moving along the longitudinal axis of symmetry 3 of a plant oriented downwind by means of a wind vane surface gets into the turbine 2 via the inlet shell 1 to make it rotate. Inasmuch as the turbine 2 is kinematically coupled with the mechanical energy conversion mechanism 5, the latter also starts operating to convert the energy of the air flow into a kind of energy as required. At the same time, the air flow is moved along the surface of the outer shell 8 to create a discharge by ejection in the rear portion of the plant downstream of the turbine 2. The air flow attains a maximum speed when acted upon by two energy fluxes from the side of an inlet section of the outer shell 1 and from the side of the outlet section of the outer shell 8, which fact facilitates a maximum of energy take-off from the air flow.

It is noteworthy that an inlet section of the outer shell 8 is configured as a ring having a width diminishing on several symmetrically arranged sections. A diminution of width of the inlet section of the outer shell 8 is connected with implementation of at least a portion of the outside surface 9 of the inlet shell I in cross section in the form of a regular polygon, with local reductions in area formed precisely in a zone of vertices thereof. And the value of a radius B of the regular polygon defining the cross section of the outside surface 9 of the inlet shell I at an inlet of the latter is selected such that with the rated speed of an air flow, a diminution of width of the inlet section of the outer shell 8 does not affect the efficiency of the air flow involved in discharging, or - to be more exact - a wind-driven electric plant will be operated in a maximum air flow energy take-off manner.

As the speed of an air flow increases above a computed value, for example, with strong gusts of wind, an energy flux being admitted to the turbine 2 via the inlet shell is increased. And a second energy flux incoming from the side of an outlet section of the outer shell 8 will be reduced. Said fall of the efficiency of the air flow involved in discharging is attributable to the fact that with an increased speed of the air flow entering the outer shell 8 above the computed value, a restriction of the inlet section of the outer shell 8 performs functions of a local resistance which reduces the speed of passage of the air flow via the outer shell 8. A reduced speed of passage of the air flow thru the outer shell 8 is responsible for lowering the efficiency of an influence said flow exerts on the creation of discharge. Thus, with a speed of the air flow exceeding the computed value there occur simultaneous increase of the energy flux being admitted to the turbine 2 from the side of the inlet shell and decrease of the energy flux entering the turbine 2 from the side of the outlet section of the outer shell 8, and what is more the amount of a total energy flow supplied to the turbine 2 remains substantially invariable, given the design speed of the air flow and also a significant increase in the speed of the air flow. And be it noted that at the time of increasing further the speed of the air flow (wind) there will increase an area of local resistance to the air flow entering the outer shell 8; in other words, the speed of passage of the air flow will further be reduced thru the outer shell 8. With the speed of the air flow reduced further up to the computed value, there occurs back redistribution of energy fluxes supplied to the turbine, i.e. the quantity of energy supplied to the turbine 2 via the inlet shell I will diminish while a portion of energy supplied to the turbine 2 on account of ejection of the air flow with the aid of the outer shell 8 will increase. Thus, with the speed of the air flow lowered up to the computed value thereof, an area of local resistance to the air flow will be reduced until the cross-sectional form of the outside surface 9 of the inlet shell I at an inlet of the latter produces any effect whatever on the air flow (given the computed speed of the air flow). When the speed of the air flow is varied, the energy flows entering the turbine 2 are regulated automatically on account of their redistribution, a factor that provides a stable speed of rotation of an output shaft of the turbine 2, regardless of environmental changes (gusts of wind). Stability of the speed of rotation of the turbine in operation reduces peak loads on the details of an apparatus and, consequently, enhances reliability and useful life of the apparatus as a whole.

For example, if a rated wind speed in a given climatic region is 6-7 m/s and a radius P of a circle defining the cross section of the inside surface 10 of the outer shell 8 in its minimum cross section is 1.5 m, then a radius B of a regular polygon defining the cross section of the outside surface 9 of the inlet shell I at an inlet of the latter should be not less than 0.825 m and not more than 1.425 m. The concrete value of said radius B of the regular polygon defining the cross section of the outside surface 9 of the inlet shell I at an inlet of the latter is selected from a specified range in relation to maximum wind speeds characteristic of the given climatic region. For example, if the maximum speed of an air flow is 9.0 m/s, then said radius B should be about 1.35 m and if the maximum speed of an air flow is 14.0 m/s, then said radius B should be 0.85 m.

## Claims

1. A wind-driven electric plant comprising an annular inlet shell, a turbine coaxially arranged within the inlet shell, a mechanism kinematically coupled with the turbine and configured and designed for converting mechanical energy, and an annular outer shell with the cross section of its inside surface being shaped as a circle, **characterized in that** at least a portion of the outside surface of the inlet shell is configured in cross section as a regular polygon, and a radius of the regular polygon defining the cross section of the outside surface of the inlet shell at an inlet of the latter is not less than 0.55 and not more than 0.95 of a circumradius defining the cross section of the inside surface of the outer shell in a minimum cross section thereof.

2. The wind-driven electric plant according to claim 1, **characterized in that** the vertices of a regular polygon defining the cross section of the outside surface of the inlet shell have a rounding-off which is defined by at least a second power curve.

3. The wind-driven electric plant according to claim 1, **characterized in that** at least a portion of the outside surface of the outer shell is formed by the lateral surface of a cylinder of revolution.

4. The wind-driven electric plant according to claim 1, **characterized in that** at least a portion of the inside surface of the inlet shell and/or outer shell is formed by the lateral surface of a cone of revolution.

5. The wind-driven electric plant according to claim 1, **characterized in that** at least a portion of the inside surface of the inlet shell and/or outer shell is formed by the lateral surface of a cylinder of revolution.
